# EUROPÄISCHE PATENTANMELDUNG

(11) **EP 1 099 586 A2**
(43) Veröffentlichungstag der Anmeldung: **16.05.2001**
(21) Anmeldenummer: 00123981.3
(22) Anmeldetag: 03.11.2000
(51) Int. Cl.: B60J 7/08

(54) **Vorrichtung zur Abdeckung eines Behälters durch eine Abdeckplane**

(30) Priorität: 09.11.1999 DE 19953673
(71) Anmelder: Schmitz Gotha Fahrzeugwerke GmbH, 99867 Gotha (DE)
(72) Erfinder: Koch, Josef, 89081 Ulm (DE)
(74) Vertreter: Weber, Gerhard

(57) **Zusammenfassung**

Für die automatische Abdeckung eines Behälters, insbesondere eines Transportbehälters eines Lastfahrzeugs, wird eine Vorrichtung vorgeschlagen, bei welcher eine Welle (WE), auf welche eine Abdeckplane (PL) aufgewickelt ist, mittels eines flexiblen Zugelements unter Abwicklung der Plane (PL) von einer Behälterlängsseite zur gegenüberliegenden verlagert wird. Zur Niederhaltung der Querkanten der Abdeckplane (PL) wird der Einsatz einer Klettverschlußverbindung (KV) vorgeschlagen.

## Beschreibung

Die Erfindung betrifft eine Vorrichtung zur Abdeckung eines Behälters durch eine Abdeckplane.

Bei auf Fahrzeugen angeordneten Behältern muß dafür Sorge getragen werden, daß im Behälter vorliegendes Ladegut während der Fahrt nicht aus diesem entweicht, z. B. durch Herausschleudern bei Erschütterungen und/oder durch Mitnahme durch den Fahrtwind. Hierzu und zum Schutz gegen Witterungseinflüsse kann die nach oben weisende Behälteröffnung durch eine Plane abgedeckt werden.

Zur Automatisierung eines solchen Abdeckvorgangs bzw. der Entfernung der Abdeckplane über der Behälteröffnung ist aus der DE 28 22 451 C2 eine Anordnung zur Abdeckung einer Fahrzeug-Schnitzelkiste bekannt, welche eine Welle mit einer aufgerollten Abdeckplane, die an einer Längsseite des Behälters befestigt ist, enthält. Die Welle ist am Ende von zwei an gegenüberliegenden Stirnseiten des Behälters angeordneten hydraulisch betätigbaren Schwenkhebeln befestigt und durch Verschwenkung der Schwenkhebel zur gegenüberliegenden Längsseite verlagerbar. Bei der Verlagerung wird die Abdeckplane von der Welle abgerollt und legt sich über das Ladegut. Zur Niederhaltung der sich zwischen den Behälterlängsseiten erstreckenden Querkanten der abgerollten Abdeckplane kann beispielsweise eine in der Endlage der Welle betätigte Klappe oder ein elastisches Band vorgesehen sein.

Der vorliegenden Erfindung liegt die Aufgabe zugrunde, eine Vorrichtung der eingangs genannten Art anzugeben, welche auf vorteilhafte Weise eine automatische Abdeckung und Freilegung einer Behälteröffnung ermöglicht.

Die Erfindung ist im Patentanspruch 1 beschrieben. Die abhängigen Ansprüche enthalten vorteilhafte Ausgestaltungen und Weiterbildungen der Erfindung.

Durch die Bewirkung einer Drehung der Planenwelle gegen die Hebelanordnung unter Einwirkung einer motorischen Kraft auf das mit der Welle gekoppelte Antriebsmittel greift die Kraft unmittelbar bei der Welle an und die Hebelanordnung ist bis auf die Abstützung gegen die bei der Wellenverdrehung auftretende Reaktionskraft im wesentlichen unbelastet, so daß für die Ausführung der Hebelanordnung ein großer gestalterischer Freiraum bleibt, welcher insbesondere die Geometrie des Behälters und an oder bei diesem angeordnete andere Funktionselemente berücksichtigen kann. Vorteilhaft hierfür ist es insbesondere auch, den motorischen Antrieb auf der Hebelanordnung, vorzugsweise in unmittelbarer Nähe der Planenwelle anzuordnen, so daß für die Übertragung der motorischen Kraft besonders einfache Einrichtungen, insbesondere ein Kegelrad- oder bevorzugt ein Schneckenradantrieb gewählt werden können.

Der Antriebsmotor ist vorteilhafterweise ein Elektromotor, welcher auf besonders einfache Weise aus einer fahrzeugeigenen Spannungsquelle versorgt ist. Der Einsatz eines Elektromotors erlaubt auch günstigerweise eine einfache Überlastsicherung z. B. bei Hindernissen durch überhöhtes Ladegut und/oder eine Endlagenabschaltung, indem die Stromaufnahme des Motors durch an sich bekannte Überwachungseinrichtungen überwacht wird und bei Überschreiten vorgebbarer Schwellwertkriterien eine Abschaltung des Antriebsmotors erfolgt. Eine Endlagenabschaltung kann auch durch Endlagenschalter erfolgen.

Eine andere vorteilhafte Antriebsart ist durch einen Hydraulikmotor gegeben, welcher vorteilhafterweise aus der bei Lastfahrzeugen typischerweise vorhandenen fahrzeugeigenen oder auch aus einer separaten Druckanlage versorgbar ist. Eine Überlast- und/oder Endlagenabschaltung kann dann aus der Überwachung des Drucks der Hydraulikflüssigkeit abgeleitet werden.

Besonders vorteilhaft für die erfindungsgemäße Vorrichtung ist der Einsatz einer an sich aus dem eingangs genannten Stand der Technik bekannte Spannbandanordnung. Dabei ist an der der aufgerollten Plane gegenüberliegenden Längsseite im Bereich der Stirnseite ein Spannband befestigt, welches mit seinem anderen Ende an der Welle befestigt ist und beim Abrollen der Plane auf die Welle oder eine mit dieser verbundene Rolle aufgewickelt wird. Bei einer rückläufigen Verlagerung der Welle wird das Spannband von der Rolle abgewickelt und versetzt damit die Welle in eine die Plane aufrollende Drehbewegung. Bei der erfindungsgemäßen Vorrichtung ist das Spannband von besonderem Vorteil, indem es bei die Plane abrollender Drehung der Welle aufgewikkelt wird und dabei eine der Rollbewegung der Planenwelle gleichgerichtete Zugkraft zur gegenüberliegenden Längsseite bewirkt.

Besonders vorteilhaft ist die Weiterentwicklung der an sich bekannten Spannbandanordnung dahingehend, daß die kumulierte Länge der gleichzeitig abgewickelten Abschnitte von Spannband und Plane gegenüber einer Mindestlänge, die im wesentlichen gleich der Länge des abgewickelten Spannbands bei vollständig aufgewickelter Plane ist, entgegen einer Rückstellkraft verlängerbar ist. Hierdurch kann beispielsweise die Planenrolle auch über ein erhöhtes Ladegutprofil hinweg bewegt werden. Vorzugsweise steht das Gurtspannband in allen auftretenden Positionen unter einer Zugspannung, so daß immer eine straffe Aufwicklung von Plane bzw. Spannband gewährleistet ist. In der kürzesten kumulierten Länge steht dann das Spannband noch unter.einer Vorspannung.

Die Vorgabe einer Vorspannung für die Rückstellkraft ist auch vorteilhaft für eine ständig straffe Aufwicklung der Plane auf die Planenwelle bzw. des Spannbands auf die Spannbandrolle, so daß in allen Positionen der Verlagerung der Planenwelle Plane und Spannband gespannt sind. Günstigerweise sind die Effekte eines überhöhten Ladeprofils und der kumulierten Längenänderung beim Wickelvorgang komplementär, so daß eine relativ geringe rückstellbare Längenreserve genügt.

Für beide Eigenschaften, Verlängerbarkeit und Zugspannung, können vorteilhafterweise federelastische Elemente eingesetzt werden, wobei diese beiden Eigenschaften vorzugsweise von ein und derselben Federelementanordnung bewirkt werden. Gemäß einer ersten vorteilhaften Ausführungsform kann das Spannband an sich ganz oder abschnittsweise federelastisch dehnbar aufgebaut sein nach Materialwahl und/oder Struktur. Eine andere Ausführung sieht ein Zugfederelement im Verlauf oder vorzugsweise an dem der Planenwelle abgewandten Ende des Spannbands vor. Besonders vorteilhaft ist eine Anordnung, bei welcher eine Wickelhülse für das Spannband koaxial zu der Planenwelle in deren Verlängerung angeordnet und mit deren Drehung derart gekoppelt, daß die Wickelhülse entgegen einer Federkraft relativ zu der Planenwelle verdrehbar ist, wobei auch in Positionen kürzester kumulierter Länge der abgewickelten Abschnitte von Plane und Spannband die Wickelhülse unter einer aufwickelnd gerichteten Vorspannung steht, welche sich durch relative Verdrehung von Wickelhülse und Planenwelle im Sinne einer Verlängerung der kumulierten Länge verstärkt. Als Federanordnung ist hierbei bevorzugt eine mit der Drehachse der Planenwelle koaxiale gewendelte Feder innerhalb der Wickelhülse und/oder der Planenwelle und/oder eines verbindenden Rohrabschnitts vorgesehen, deren eines Ende mit der Planenwelle und deren anderes Ende mit der Wickelhülse gedreht ist, und die nach unverspannter Montage durch relatives Verdrehen von Planenwelle und Wickelhülse eine Vorspannung erhält. Die relative Verdrehung kann insbesondere durch Zug am Spannband und dessen Festlegung in vorgespanntem Zustand erfolgen.

Als Spannband kommt insbesondere ein textiles Gurtspannband in Betracht, es kann aber auch ein Federstahlband oder dgl. eingesetzt werden.

Die Spannbandvorrichtung ist vorzugsweise an beiden Enden der Planenwelle im Bereich der gegenüberliegenden Behälterstirnseiten vorgesehen. Eine Hebelanordnung mit Antriebsmotor kann in einer ersten Ausführung lediglich an einem Wellenende vorgesehen sein. Die gegenüberliegende Stirnseite des Behälters ist dann konstruktiv durch die Vorrichtung zur automatischen Abdekkung nicht eingeschränkt. Insbesondere bei der bevorzugten Anwendung an einem Fahrzeug-Muldenbehälter kann die Hebelanordnung mit Motorantrieb an der dem Führerhaus zugewandten Stirnseite des Behälters angeordnet sein und damit sowohl gegen externe Einwirkungen in einer besonders geschützten Position liegen als auch selbst kein Verletzungspotential nach außen bergen. Durch die hohe Verwindungssteifigkeit der Planenwelle ist eine hinreichend gleichmäßige Verlagerung der Planenwelle über die gesamte Länge im Regelfall gegeben, insbesondere bei dem bevorzugten Einsatz einer Spannbandvorrichtung an beiden Wellenenenden.

Eine andere Ausführungsform sieht je eine Hebelanordnung mit einem eigenen Antriebsmotor an beiden Wellenenden vor, welche dann jeweils in kleinerer Bauform mit geringerer Einzelleistung vorliegen können. Der einfache Aufbau verschiedener geeigneter Hebelanordnungen erlaubt einen platzsparenden Aufbau und den Einsatz auch an der heckseitigen Stirnseite eines Kippmuldenbehälters mit schwenkbarer Heckwand.

Vorzugsweise sind Niederhalteeinrichtungen für die entlang der Stirnseiten zwischen gegenüberliegenden Längsseiten sich erstreckenden Kanten der abgerollten Abedeckplane vorgesehen, so daß insbesondere bei starker Luftströmung aufwirbelbares Ladegut auch bei zügiger Fahrt und/oder starkem Wind sicher abgedeckt ist. Gemäß einer bevorzugten Ausführungsform umfassen die Niederhalteeinrichtungen Klettverschlußeinrichtungen, welche mit einem Teil im Bereich der Oberkante der Behälterstirnseite und mit dem korrespondierendem anderen Teil entlang der Kante der Abdeckplane angeordnet sind. Der besondere Vorteil der Klettverschlußeinrichtungen ist in deren guter mechanischer Festigkeit, insbesondere gegen quer zur Klettfläche wirkende Zugkräfte und in dem einfachen Zusammenfügen ohne besondere Ausrichtung zu sehen.

Für die Erzielung des Eingriffs der Teile der Klettverschlußeinrichtungen können, insbesondere bei über die Behälteroberkanten hinausragendem Ladegut Niederhalteeinrichtungen wie aus dem Stand der Technik bekannt, beispielsweise Schwenkklappen oder elastische Saumbänder, unterstützend vorgesehen sein. Bei Abrollen der Abdeckplanenrolle auf der Oberkante der Behälterstirnseiten ist ein Klettverschlußeingriff bereits durch den Abrollvorgang zuverlässig gegeben.

Ein Lösen des Klettverschlusses erfolgt bei der Freilegung der Behälteröffnung mit dem Aufrollvorgang der Abdeckplane ohne größeren Kraftaufwand, da hierbei durch die Rollbewegung die zur Lösung eines Klettverschlusses optimale Abzugsrichtung senkrecht zur Klettfläche automatisch vorliegt. Die Niederhaltung der Abdeckplane ist daher auch unabhängig von der besonderen Art der Verlagerung der Welle vorteilhaft.

Eine weitere verschmutzungsunempfindliche Einrichtung zur Planenniederhaltung kann Dauermagnetelemente im Planensaum vorsehen, welche auch ohne Andruckkraft an der typischerweise weichmagnetisch metallischen Muldenoberkante haften. Eine Kombination mit der beschriebenen Klettverschlußeinrichtung ist besonders vorteilhaft.

Die Abdeckplane kann sowohl eine durchgehende Fläche ohne Unterbrechungen bilden, was insbesondere für feinkörniges oder sogenanntes schwebendes Ladegut von Bedeutung ist, als auch als Fläche mit Durchbrechungen oder auch als Netz ausgebildet sein. Die Abdeckplane kann beispielsweise als materialhomogene Folie, als Gewebebahn, als gewebeverstärkte Folie, als Netz unterschiedlicher Maschenweite, auch aus Metall usw. ausgeführt sein.

Die Hebelanordnung stützt sich von der Achse der Welle beabstandet vorzugsweise an der Stirnwand des Behälters ab.

Gemäß einer ersten vorteilhaften Ausführungsform ist der von der Wellenachse beabstandete Abstützpunkt der Hebelanordnung ortsfest bezüglich des Behälters und die Hebelanordnung ist bei der Verlagerung zwischen den Behälterlängsseiten in dem Abstützpunkt schwenkbar. Die Hebelanordnung kann dabei in einfacher Ausführung starr ausgebildet sein, ist aber vorzugsweise in ihrer Länge zwischen Abstützpunkt und Wellenachse veränderbar, insbesondere in Form einer mehrteiligen Hebelanordnung mit gegeneinander verschiebbaren Hebelelementen, beispielsweise einem teleskopierbaren Hebelarm, und/oder mit mehreren gelenkig verbundenen Elementen, wobei auch die mehrteiligen Hebelanordnungen eine sichere Abstützung gegen die bei der Verdrehung auftretende Reaktionskraft gewährleisten.

Gemäß einer zweiten Variante für die Abstützung der Hebelanordnung ist der Abstützpunkt verschiebbar bezüglich des Behälters und beispielsweise in einer Kulisse oder dgl. geführt, wobei die Kulisse vorzugsweise fest mit dem Behälter verbunden ist. Durch den bei der Verlagerung der Planenwelle mit verschiebbarem Abstützpunkt kann die Länge der Hebelanordnung als Abstand zwischen Abstützpunkt und Wellenachse wesentlich kürzer sein als die halbe Behälterbreite zwischen den Behälterlängsseiten.

Die Kulisse verläuft vorteilhafterweise in der Nähe der oberen Stirnkanten einer Stirnfläche des Behälters überwiegend horizontal zwischen den Längsseiten des Behälters. Insbesondere bei nach oben gewölbten Stirnkanten kann auch der Verlauf der Kulisse eine Wölbung aufweisen. Die Hebelanordnung kann mit dem Abstützpunkt gleitend oder rollend in der Kulisse geführt sein.

Die Hebelanordnung kann vorteilhafterweise bei der Verlagerung der Welle eine variable Neigung gegen die Kulissenbahn einnehmen, insbesondere bei über die zwischen den beabstandeten Stirnkanten gebildete obere Behälterabschlussfläche hinausragendem Ladegut und/oder bei nicht parallelem Verlauf von Stirnkante und Kulisse. Dabei ist es insbesondere hinsichtlich der Endlagen der Welle günstig, wenn die Neigung der Hebelanordnung gegen den Verlauf der Kulissenbahn in den Endlagen, vorzugsweise aber auch in allen Zwischenpositionen sich eine zumindest qualitativ definierte Ausrichtung einhält und aus dieser nicht unkontrolliert verkippt. Hierfür können beispielsweise an der Hebelanordnung Begrenzungsmittel vorgesehen sein, welche einen zulässigen Neigungswinkelbereich definieren, der durchaus im Verlauf der Kulissenbahn unterschiedlich sein kann. Alternativ oder zusätzlich kann eine Federkraft die Hebelanordnung in eine bevorzugte Neigungsrichtung bezüglich der Kulissenbahn drücken und die Hebelanordnung innerhalb eines weiten Neigungswinkelbereichs gegen die Kulissenbahn verschwenkbar sein.

Bei Ausführung der Hebelanordnung mit einem starren Hebel zwischen Wellenachse und Abstützpunkt kann in einer ersten Ausführung die Kulissenbahn als Führung für den Abstützpunkt in einem von einer Längsseite her beginnenden Abschnitt im wesentlichen horizontal verlaufen und im Bereich der gegenüberliegenden Längsseite in eine zur Längsseitenwand parallele Richtung umgelenkt sein, wobei die relative Neigung des Hebels zur Kulissenbahn über den gesamten Bahnverlauf qualitativ unverändert bleibt, das heißt immer im gleichen Neigungssinn bleibt und nicht in diesen anderen Neigungssinn umkippt. Durch die Umlenkung ist dabei eine zuverlässige Verlagerung der Welle in die Endlage auf dieser Längsseite auf einfache Weise sichergestellt.

Eine andere Variante mit starrem Hebel zwischen Abstützpunkt und Wellenachse sieht einen im wesentlichen horizontalen oder zur Stirnkante der Stirnfläche annähernd parallelen Verlauf mit einem Umkehrpunkt auf, in welchem die Neigung des Hebels gegen den Verlauf der Kulissenbahn gezielt gekippt wird, um in den gegenüberliegenden Endlagen in entgegengesetzte Neigungen des Hebels mit außenliegender Planenwelle und zur Behältermitte gerichtetem Hebel zu erreichen.

Auch bei verschiebbarem Abstützpunkt der Hebelanordnung kann es vorteilhaft sein, die Hebelanordnung mehrteilig mit relativ zueinander beweglichen Hebelelementen wie gegeneinander verschiebbaren und/oder gelenkig verbundenen Hebelelementen auszubilden, wodurch sich weitere Freiheiten der geometrischen und funktionellen Gestaltung ergeben. Die Relativbewegung der Hebelelemente kann dabei entgegen oder unter dem Einfluß einer Rückstellkraft erfolgen.

Eine hohe Positionierung einer Hebelführung insbesondere im Bereich der Mitte der Stirnseite ist vor allem von Bedeutung bei Fahrzeug-Kippmulden, bei welchen an der Stirnseite mittig ein Presskopf einer Hydraulikzylindereinrichtung angeordnet ist.

Die Erfindung ist nachfolgend anhand bevorzugter Ausführungsbeispiele unter Bezugnahme auf die Abbildungen noch eingehend veranschaulicht. Dabei zeigt
- Fig. 1: einen Behälter in Seitenansicht
- Fig. 2: eine Ansicht von der Heckseite
- Fig. 3:: eine Seitenansicht der Spannbandanordnung aus Fig. 2
- Fig. 4:: eine bevorzugte Spannbandeinrichtung
- Fig. 5:: einen Antriebsmotor auf einer Hebelanordnung
- Fig. 6 bis Fig. 12:: verschiedene vorteilhafte Hebelanordnungen

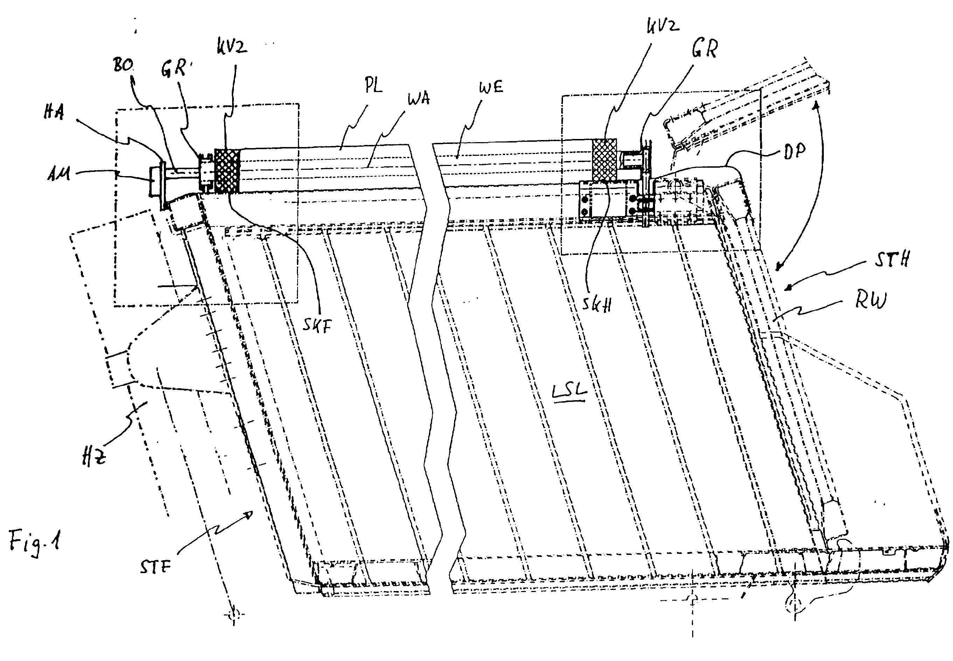

In der in Fig. 1 als Aufsicht auf die linke Seitenwand LSL skizzierten Seitenansicht eines Behälters, der gemäß einem bevorzugten Anwendungsfall als Transportmulde eines Lastfahrzeugs ausgebildet ist, sind unter Aussparung eines Mittelabschnitts Frontpartie und Heckpartie des Behälters dargestellt. Die Frontpartie sei in üblicher Weise einem Fahrerstand des Lastfahrzeugs zugewandt und enthalte beispielsweise Hubmittel in Form eines Hydraulikzylinders HZ zur frontseitigen Anhebung des Behälters, welcher dann als Kippmulde ausgeführt ist mit einer ausklappbaren Rückwand RW am Behälterheck. Die Frontseite STF und die Heckseite STH des Behälters seien als Stirnseiten im Unterschied zu den Längsseiten LSL, LSR bezeichnet. Der Behälter ist nach oben offen und diese zur Beladung dienende Behälteröffnung ist durch die Plane verschließbar.

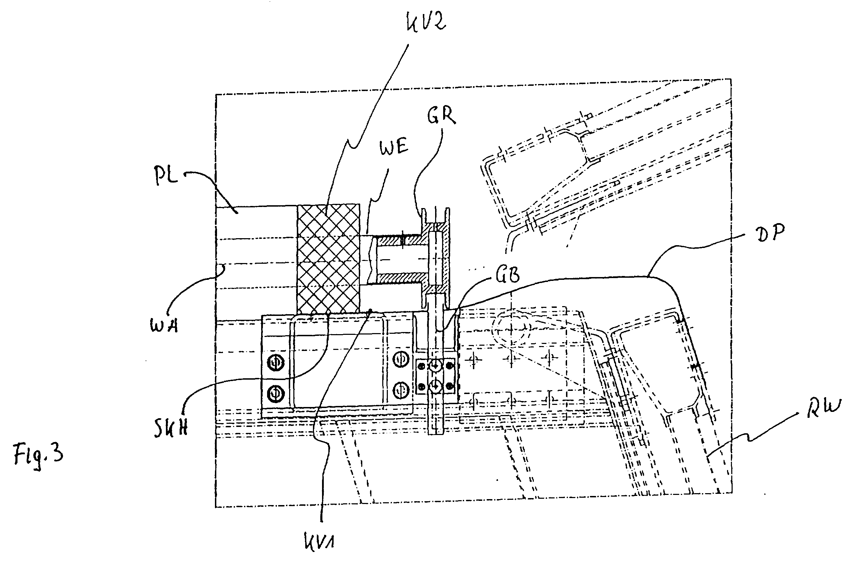

An einer der Seitenwände ist ein Gurtspannband GB einseitig verankert, welches mit zur Abdeckplane PL entgegengesetztem Wicklungssinn auf eine mit der Welle WE, auf welche die Plane PL aufgewickelt ist, drehfest verbundene Gurtrolle GR als Wickelhülse aufwickelbar ist. Eine gleichartig aufgebaute Gurtspannband-Vorrichtung ist am heckseitigen Ende der Welle vorgesehen (rechts in Fig. 1) und in Fig. 3 detaillierter dargestellt.

Die Plane PL ist mit einer Längskante an einer Längsseite LSR des Behälters befestigt und bei freigelegter Behälteröffnung auf die sich parallel zur Behälterlängsseite erstreckende Welle WE aufgerollt, an welcher sie mit der anderen Planen-Längskante befestigt ist. Die aufgerollte Plane liegt vorzugsweise in einer Aufnahme bei der Befestigungslängsseite LSR.

Bei Verlagerung der Welle in Richtung der gegenüberliegenden Längsseite LSL des Behälters wird die Plane von der Welle abgerollt und die Welle dabei gedreht. Durch die feste Verbindung von Welle WE und Gurtrolle GR wird das an der gegenüberliegenden Längsseite LSL befestigte Gurtspannband GB gegensinnig zum Wickelsinn der Abdeckplane auf der Welle auf die Gurtrolle GR aufgerollt. Beim Zurückverlagern der Welle zur Freilegung der Behälteröffnung wird die Welle durch das Abwickeln des Gurtspannbands GB von der Gurtrolle GR im Gegensinn gedreht und dabei wird die Abdeckplane auf die Welle aufgerollt. Die gemeinsame Drehachse von Welle WE und Gurtrollen GR ist mit WA bezeichnet. Die Welle ist vorzugsweise als Rohr ausgeführt. Die feste Verbindung von Welle WE und Gurtrolle GR ist gemäß einer an späterer Stelle noch eingehend erläuterten Abänderung vorteilhaft ersetzbar durch eine entgegen einer Federkraft in beschränktem Umfang verdrehbare Verbindung.

Die die Behälteröffnung frontseitig und heckseitig begrenzenden Kanten zwischen den Längsseiten seien als Stirnkanten SKF frontseitig bzw. SKH heckseitig bezeichnet. Die Stirnkanten können gegen die Behälterwände in Längsrichtung versetzt sein. Die Stirnkanten sind parallel zueinander und vorteilhafterweise horizontal gerade. Gemäß anderer vorteilhafter Ausführung können die Stirnkanten nach oben gewölbt verlaufen und dadurch bereits eine höhere Ladegutschüttung berücksichtigen. Die Plane überdeckt in Längsrichtung des Fahrzeugs noch beide Stirnkanten und rollt, soweit das Ladegut nicht über die zwischen den Stirnkanten aufgespannte Fläche hinausragt, auf den Stirnkanten ab. Vorteilhafterweise sind die Stirnkanten mit einem ersten KV1 und die darauf abrollenden Randabschnitte der Planen-Querkanten mit dem korrespondierenden anderen Teil KV2 einer Klettverschlußvorrichtung versehen, so daß sich beim Abrollen der Plane unter dem Einfluß der Andruckkraft der Plane unter dem Gewicht der Welle und ggf. darauf noch aufgewickelter Plane eine zuverlässige Klettverschlußverbindung ergibt, welche insbesondere gegen seitliche Zugkräfte stabil ist. Beim Aufrollen der Plane wirken durch die Rollbewegung die abziehenden Kräfte senkrecht zur Klettverbindungsfläche und ermöglichen eine zerstörungsfreie Lösung der Klettverbindung. Die Planenwelle kann bei der Rollbewegung über die Behälterstirnkanten in Längsrichtung des Fahrzeugs geführt sein, beispielsweise durch Eingriff eines Stegs auf der Stirnkante in eine Ringnut einer mit der Planenwelle verbundenen Rolle, insbesondere auch der Gurtspannrolle, oder durch einen an den Stirnkanten außen entlanglaufenden Kragen der Gurtrolle usw.

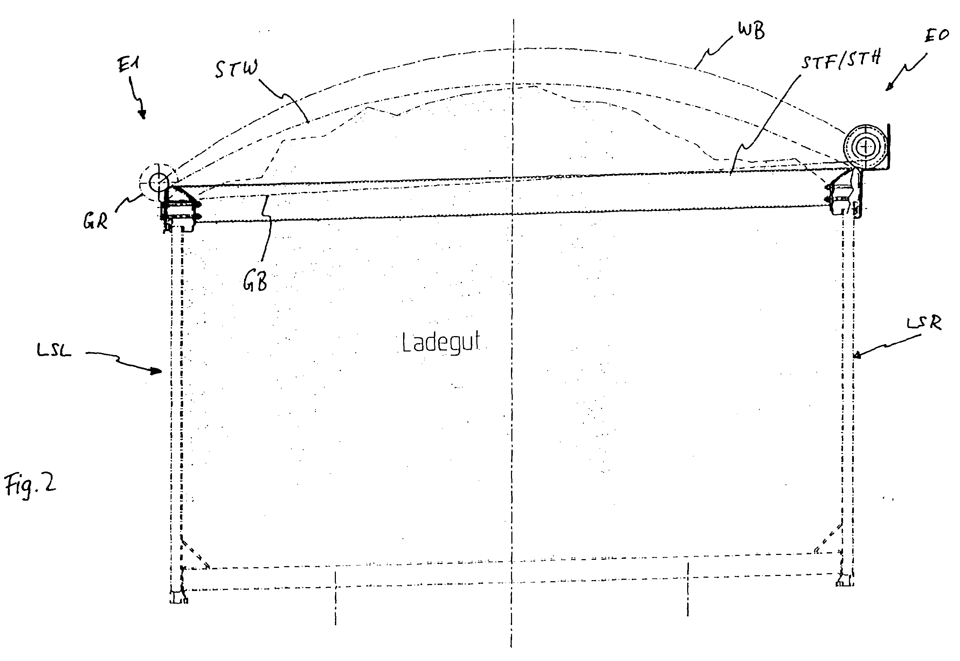

Bei über die zwischen den Stirnkanten SKF, SKH aufgespannte Fläche hinausragendem Ladegut, wie in Fig. 2 skizziert, rollen die Planenränder nicht mehr auf den Stirnkanten ab, so daß für die Niederhaltung der Abdeckplane die Klettverbindung von Hand oder durch zusätzliche Hilfsmittel, wie beispielsweise die aus dem eingangs genannten Stand der Technik bekannte schwenkbare Platte und/oder ein elastisches Band im Planensaum herbeigeführt werden kann. Die maximale Bahnwölbung der Wellenachse bei der Verlagerung ist durch eine mit WB gekennzeichnete unterbrochene Linie angegeben. Durch eine nach oben gerichtete Wölbung der Stirnkanten, wie mit unterbrochener Linie STW angedeutet, kann eine solche mittig überhöhte Ladegutschüttung bereits von vornherein eingeplant sein. Der gewölbte Verlauf hat weiter den Vorteil, daß die unter Zugspannung stehende Plane insbesondere ohne Klettverschluß auf der gewölbten Sitrnkante STW besser anliegt.

Die Klettverschlußeinrichtung ist auch unabhängig vom Mechanismus der Wellenverlagerung vorteilhaft. Durch einen Wulst, eine Sicke oder dgl. auf den Stirnkanten kann eine verbesserte Abdichtung der Plane entlang der Auflageflächen der Stirnkanten erreicht werden, indem die Plane insbesondere bei nach oben gewölbter Stirnfläche auf der Sicke unter verstärkter Spannung anliegt.

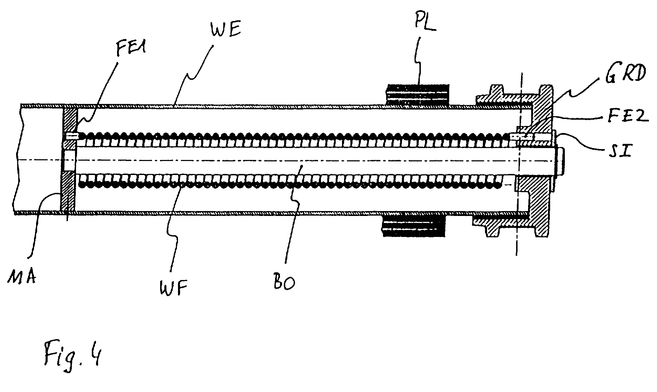

Die Fig. 4 zeigt eine bevorzugte Ausführung einer heckseitigen Spannbandanordnung. Am Ende der Planenwelle WE ist die Gurtrolle GRD koaxial zur Welle WE und relativ zu dieser um die gemeinsame Achse verdrehbar. Die Welle WE ist zumindest abschnittsweise als Rohr ausgeführt, in welches verdrehsicher eine Mitnehmeranordnung MA, z. B. in Form einer Scheibe eines Stegs etc. von Wellenende beabstandet eingesetzt ist. Eine gewendelte Feder WF ist innerhalb des Rohrabschnitts zwischen Mitnehmeranordnung und Gurtrolle GRD um einen koaxialen Haltebolzen BO angeordnet und mit ihrem einen Ende FE1 in der Mitnehmeranordnung und mit ihrem anderen Ende FE2 in der Gurtrolle GRD eingehängt. Die verdrehbare Gurtrolle GRD ist mittels Haltemitteln Sl auf dem Bolzen BO achsial gesichert.

Die Feder WF wird anfangs nach der unverspannten Montage durch Verdrehen der Gurtrolle GRD relativ zur Welle WE in der Richtung vorgespannt, daß die Federspannung das Gurtband strafft. Wird bei der Verlagerung der Planenwelle zwischen den Längsseiten des Behälters die Gurtrolle weiter gegen die Welle verdreht, so nimmt die Federspannung zu und gewährleistet bei nachlassendem Gurtbandzug ein straffes Aufwickeln des Gurtbands auf die Gurtrolle bzw.

der Plane auf die Planenwelle. Die Verdrehbarkeit von Gurtrolle und Planenwelle unter der Federspannung berücksichtigt insbesondere auch die bei der Wellenverlagerung wechselnden und i. a. unterschiedlichen Wickeldurchmesser von Spannband und Plane.

Die Verdrehbarkeit der Gurtrolle relativ zur Welle kann dabei je nach Einsatzfall durchaus auch mehrere Umdrehungen umfassen. Die Federspannkraft kann durch Parameter der Feder und die anfänglich eingestellte Vorspannung beeinflußt werden.

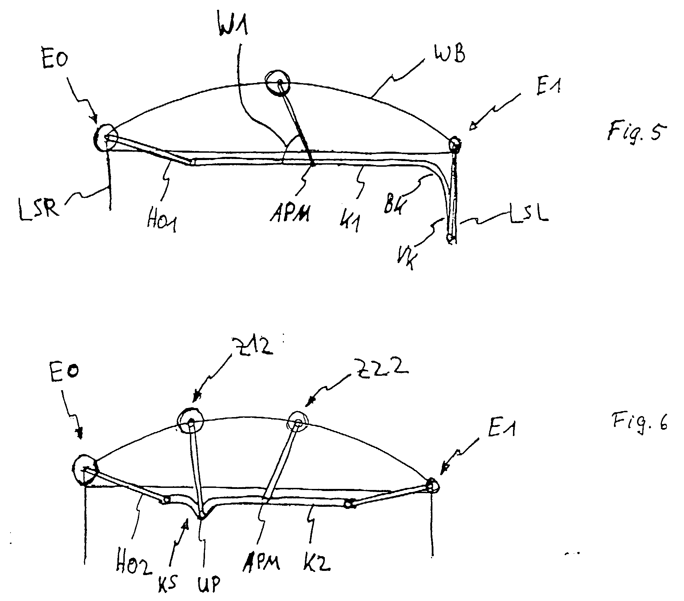

Die Fig. 5 bis Fig. 11 zeigen in stark schematisierter Form ohne Maßstabstreue Beispiele für vorteilhafte Hebelanordnungen. Dabei ist mit WB eine maximal gewölbte Bewegungslinie der Planenwellenachse eingezeichnet, welche durch eine Spannbandanordnung gegenüber der horizontalen Verbindung zwischen der Endlage EO mit aufgewickelter Plane und abgewickeltem Spannband einerseits und der Endlage E1 mit abgewickelter Plane und aufgewickeltem Spannband noch möglich ist und auch eine erhöhte Ladegutschüttung erlaubt. Die Planenwelle und die Hebelanordnung sind gleichzeitig in den beiden Endlagen und wenigstens einer Zwischenposition eingezeichnet.

Bei der in Fig. 5 skizzierten Anordnung besteht die Hebelanordnung aus einem starren Hebel H01, der an seinem der Planenwelle entgegengesetzten Ende in einer Kulisse K1 oder einer funktional vergleichbaren Führungsbahn verschiebbar geführt ist. Der Hebel kann hierzu beispielsweise einen in der Kulisse verschiebbaren Kulissenstein, eine Rolle, ein Kugellager etc. aufweisen, welches einen verschiebbaren Abstützpunkt APM bildet. Der Neigungswinkel W1 des Hebels H01 gegen den Verlauf der Kulisse K1 kann je nach Position der Planenwelle quantitativ variieren, wobei aber die qualitative Ausrichtung des Hebels gegen die Kulisse in der Weise, daß der Hebel z. B. immer nach links geneigt sei, für alle Positionen gleich bleibt. Die Kulisse verläuft über einen weiten Bereich im wesentlichen horizontal in der Nähe der Stirnkante SKF der frontseitigen Stirnfläche STF und schwenkt im Bereich der Endlage E1 bzw. der Längsseite LSL nach unten um. Der beim Abwickeln der Plane anfänglich auf die Endlage E1 zulaufende Abstützpunkt entfernt sich dabei bei der Annäherung der Planenwelle an die Endlage E1 von dieser Endlage.

Um ein Umkippen des Hebels in einer steilen Zwischenposition zu verhindern, kann z. B. der Hebel ausreichend lang gewählt werden oder es können zusätzliche Mittel zur Gewährleistung der gewählten definierten Neigungsrichtung vorgesehen sein. Solche zusätzlichen Mittel können beispielsweise als Anschlagelemente einen Neigungswinkelbereich begrenzen und/oder können mittels Federelementen, welche sich vorzugsweise gleichfalls in oder an der Kulisse abstützen, auf eine Verkleinerung des Winkels W1 hinwirken.

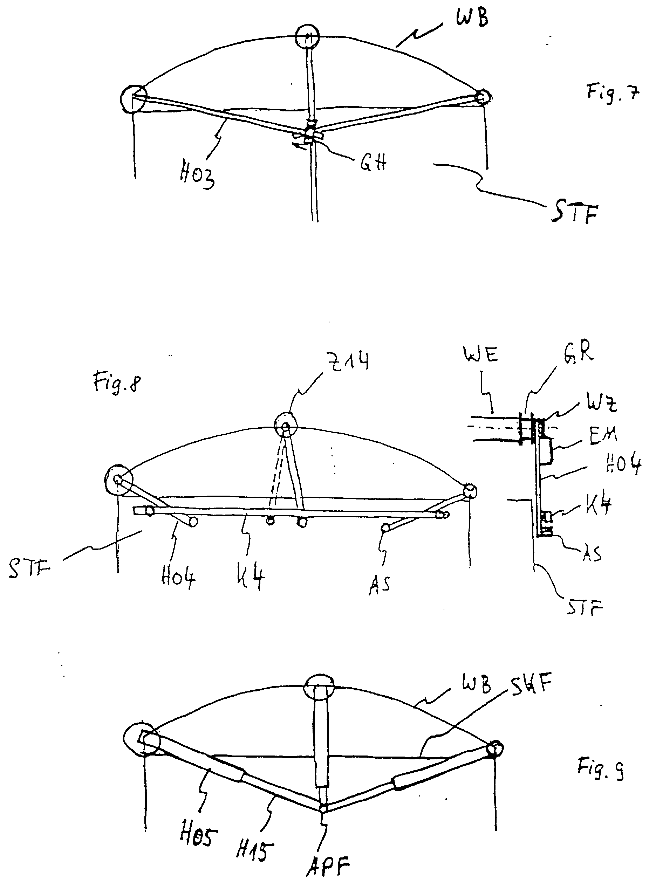

Auch im Beispiel nach Fig. 6 ist ein starrer Hebel H02 zwischen Planenwelle und einem in einer Kulisse K2 verschiebbaren Abstützpunkt APM vorgesehen, wobei hier allerdings im Unterschied zum Beispiel nach Fig. 7 die Neigung des Hebels bezüglich dem Kulissenverlauf bei der Verlagerung gezielt gekippt wird und im Bereich der Endlagen die Neigung des Hebels jeweils von der Fahrzeugmitte zu der jeweiligen Endlage hin gerichtet ist. Hierzu ist im Verlauf der Kulisse eine nach unten weisende in einem Umkehrpunkt KP endende Spitze KS, in welche die Kulisse von beiden Seiten gebogen einmündet, ausgebildet. Ausgehend von der Endlage E0 der Planenwelle mit einem gegen die Kulisse nach links geneigten Hebel H02 wird bei Verlagerung der Planenwelle in Richtung der Zwischenposition Z12 der in der Kulisse K2 geführte Abstützpunkt APM in die Spitze KS geleitet und stößt an dem Umkehrpunkt UP, in welchem die Kulissenzweige steil verlaufen, an und der Hebel H02 wird ohne Weiterbewegung des Abstützpunkts mit Weiterverlagerung der Planenwelle nach rechts gekippt und danach aus der Spitze in den weiter nach rechts führenden Kulissenzweig gezogen und weist nunmehr eine Neigung nach rechts gegen die Kulisse K2 auf (Z22). Bei Verlagerung der Planenwelle von der Endlage E1 in Richtung von E0 wird der Hebel im Umkehrpunkt in Gegenrichtung verkippt.

Das Beispiel nach Fig. 7 zeigt gleichfalls einen einstückigen Hebel H03, welcher aber nicht einen bestimmten Endpunkt als Abstützpunkt aufweist, sondern gleitend in einer bezüglich der Stirnfläche STF des Behälters ortsfest angeordneten, drehbaren Hülse GH verschiebbar geführt ist. Bei Verlagerung der Welle wird der Hebel je nach Distanz der Planenwelle von der Hülse GH in der Hülse verschoben und dreht diese zugleich mit. Die Hülse fängt quer zur Hebellängsrichtung die Reaktionskraft der Verdrehung der Planenwelle ab.

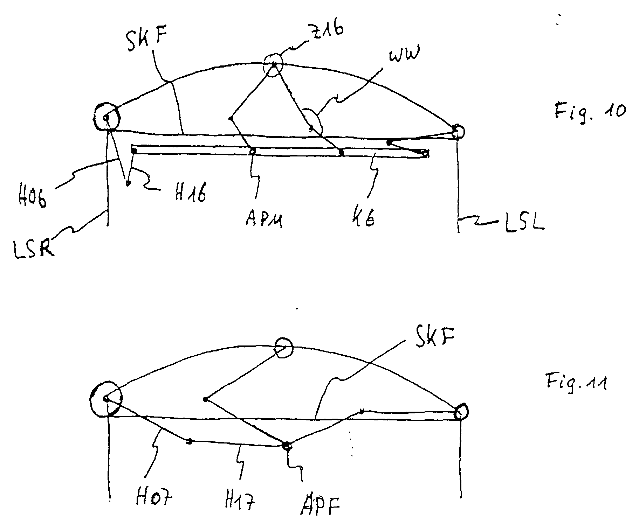

Bei einer in Fig. 8 skizzierten Ausführung ist als Spezialfall einer Kulisse eine Führungsschiene K4 in geringem Abstand von der Stirnfläche STF angeordnet. Ein Hebel H04 der Hebelanordnung liegt in einem Führungsraum zwischen Führungsschiene K4 und Stirnfläche und ist durch eine Auszugsicherung AS an dem der Planenwelle abgewandten Hebelende gegen Ausziehen aus dem Führungsraum gesichert. Der Hebel ist dabei in einer Zwischenposition Z14 der Planenwelle innerhalb des Führungsraums zwischen zwei Stellungen jeweils bis zum Anschlag der Auszugsicherung an der Führungsschiene schwenkbar und wird je nach Verlagerungsrichtung der Planenwelle in der Zwischenposition Z14 eine der beiden eingezeichneten Stellungen einnehmen.

Die Ausführungsformen nach Fig. 9 bis Fig. 11 weisen jeweils mehrteilige Hebelanordnungen mit wenigstens zwei relativ zueinander beweglichen Hebelelementen zwischen Planenwelle und Abstützpunkt auf.

In dem Beispiel nach Fig. 9 besteht die Hebelanordnung aus zwei relativ zueinander längsverschiebbaren Hebelelementen H05 und H15, welche insbesondere teleskopartig ineinander geführt sein können und eine knicksteife längenvariable Hebelanordnung bilden. Dies ermöglicht eine der Stirnkante SKF nahe Anordnung des festen Abstützpunkts APF, um welchen die Hebelanordnung schwenkbar ist. Die Länge der Hebelanordnung ist dann in einer mittleren Zwischenposition der verlagerten Planenwelle minimal und in den Endlagen der Planenwelle maximal. Die Längenveränderung kann unter dem Einfluß bzw. entgegen einer Federkraft erfolgen.

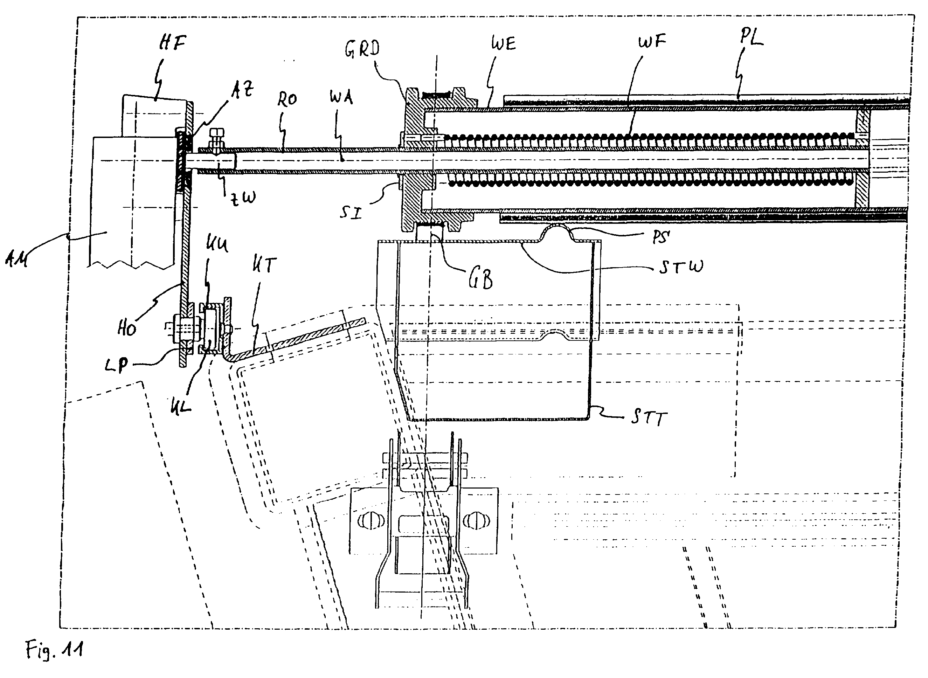

Bei der in Fig. 10 skizzierten Ausführungsform besteht die Hebelanordnung aus zwei gelenkig miteinander verbundenen Hebelelementen H 06 und H16, von denen das erste Hebelelement H06 zu der Planenwelle und das zweite Hebelelement zum verschiebbar geführten Abstützpunkt APM führt. Der Abstützpunkt ist in einer Kulisse K6 geführt, welche vorzugsweise in der Nähe der Stirnkante SKF parallel zu dieser und/oder horizontal verläuft. Die Hebelelemente sind so dimensioniert, daß eine Streckung der Hebelanordnung auf einen Winkel WW zwischen den beiden Hebelelementen von weniger als 180 Grad für die Endlagen und alle Zwischenpositionen der Planenwelle als Distanz zwischen Planenwelle und Kulisse ausreicht. Vorzugsweise liegt die Hebelanordnung in allen Positionen, zumindest aber in den Endlagen der Planenwelle im wesentlichen innerhalb des durch die Behälterseitenwände LSR und LSL und das Planendeckprofil begrenzten Querschnitts. In Zwischenpositionen der Planenwelle kann die Hebelanordnung durchaus je nach Größe und Richtung der auf die Planenwelle ausgeübten Kraft verschiedenen Stellungen einnehmen wie angedeutet. Der Winkel WW zwischen den Hebelelementen kann auf einen Bereich von z. B. 10 Grad bis 170 Grad beschränkt sein. Eine nicht eingezeichnete Federanordnung kann im Gelenk streckend oder beugend auf die Hebelanordnung wirken.

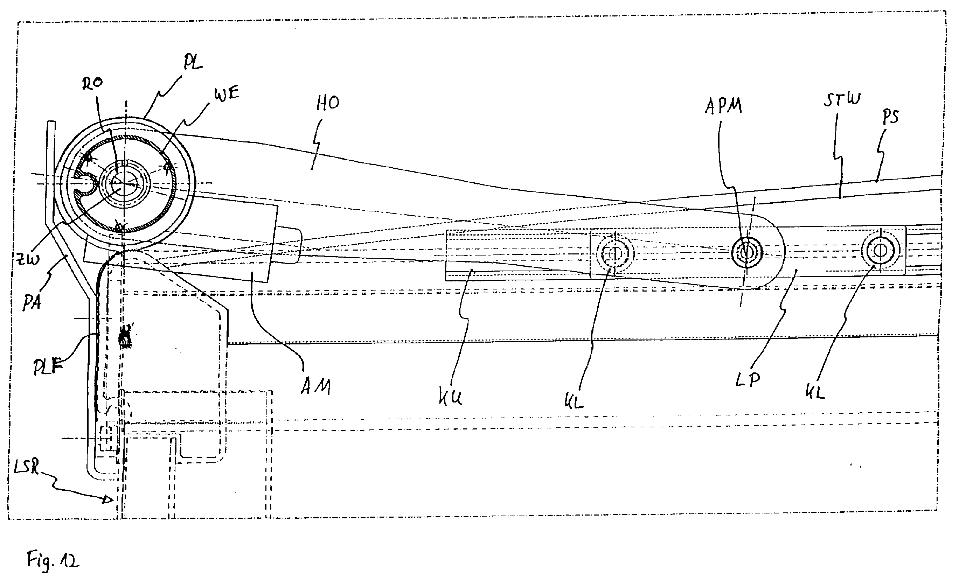

Die in Fig. 11 skizzierte Ausführungsform sieht eine Hebelanordnung mit zwei gelenkig verbundenen Hebelelementen H07 und H17 zwischen der Planenwelle und einem festen Abstützpunkt APF vor, wobei die Hebelanordnung in allen Positionen der Planenwelle gleichsinnig abgewinkelt ist. Der feste Abstützpunkt kann dabei nahe bei der Stirnkante SKF liegen.

Eine vorteilhafte Ausführung einer Hebelanordnung mit einem Antriebsmotor ist in Fig. 11 in Seitenansicht und in Fig. 12 mit Blick in Längsrichtung skizziert. Der Hebel bzw. bei mehrteiligen Hebelanordnungen das zur Planenwelle reichende Hebelelement HO ist relativ zur Planenwelle drehbar gelagert und umschließt beispielsweise den in Fig. 4 skizzierten Bolzen BO oder wie skizziert ein dessen Funktion übernehmendes Innenrohr RO. Ein Zahnrad WZ ist über das Rohr RO drehfest mit der Planenwelle verbunden. Ein Zahnrad AZ als Antriebsmittel ist beispielsweise über eine Antriebswelle ZW drehfest mit dem Innenrohr RO und damit mit der Planenwelle WE verbunden. Das Motorgehäuse eines Antriebsmotors AM, insbesondere eines Elektromotors ist beispielsweise mittels eines Halteflansches HF auf dem Hebelelement HO befestigt, wobei für einen Schneckenantrieb die Achse der Motorwelle senkrecht zur Achse der Planenwelle ausgerichtet ist und einen Wendelgang SN trägt, welcher mit dem Zahnrad AZ ständig in Eingriff steht und mit diesem einen Schneckentrieb zur Übertragung der Motorkraft auf das Zahnrad bildet. Andere Übertragungsformen wie z. B. über Kegelradgetriebe, Stirnzahnradgetriebe bei paralleler Ach-senausrichtung, Riementriebe, Reibradantriebe, Antriebsformen mit Überlastsicherung etc. sind gleichfalls realisierbar. Insbesondere kann auch ein Motor mit integriertem Übersetzungsgetriebe oder ein bauartbedingt langsam laufender Motor mit einer Antriebswelle direkt mit dem Innenrohr RO verbunden sein. Weitere mögliche Ausführungsformen eines Antriebsmittels zur Übertragung der Motorkraft auf die Planenwelle sind dem Fachmann bekannt. Der Schneckentrieb ist vorteilhafterweise selbsthemmend, so daß in den Endlagen vor Abschalten des Motors eine entlagensichernde Wickelspannung des aufgewikkelten Teils (Plane bzw. Spannband) erzeugt werden kann, welche nach Abschalten des Motors gehalten wird. Eine Drehung der Motorwelle wird über den Schneckentrieb in eine Drehung des Zahnrads AZ relativ zum Hebelelement HO umgesetzt. Ist dieses durch Abstützung an einem von der Wellenachse WA beabstandeten Abstützpunkt APM gegen ein Verdrehen abgestützt, wird die Planenwelle WE in eine Drehung um die Wellenachse WA versetzt und durch den Zug in dem je nach Drehsinn aufgewickelten Element Plane PL oder Gurtspannband GB in eine Richtung quer zu den Längsseiten verlagert. Durch die primär durch die Motorkraft bewirkte Drehbewegung der Planenwelle wird ein Abrollvorgang auch bei unebenem überstehendem Ladegut wirkungsvoll unterstützt.

Der Antriebsmotor kann auch von der Planenwelle weiter beabstandet sein, wobei dann die Antriebskraft beispielsweise über eine Verlängerung der Antriebswelle oder ein anderes an sich bekanntes Kraftübertragungsmittel einschließlich Kette, Riemen usw. zur Planenwelle bzw. einem mit dieser drehfest verbundenen Antriebsmittel geleitet ist. Das Antriebsmittel kann auch mit einer gegenüber der Planenwelle entgegen einer Rückstellkraft begrenzt verdrehbaren Spannbandrolle verbunden sein.

Bei der in Fig. 11 und Fig. 12 skizzierten bevorzugten Ausführungsform ist der Hebel HO in einem Abstützpunkt APM drehbar auf einer Führungsplatte LP befestigt, welche ihrerseits entlang einer Kulissenbahn, vorzugsweise der in Fig. 5 skizzierten Art, verschiebbar ist. Die Führungsplatte LP verläuft außerhalb der Kulisse KU, welche fest mit der Behälterstirnwand verbunden ist, beispielsweise über einen Kulissenträger KT. Die Führungsplatte LP trägt seitlich vom Abstützpunkt APM beabstandet zwei Kugellager KL, welche innerhalb der Kulisse KU laufen. Dies gewährleistet einen leichten Lauf der Führungsplatte entlang der Kulisse und verhindert weitgehend eine Verkantung der Führungsplatte und der Lager gegen die Kulisse.

Bei der Verlagerung der Welle zwischen den Längsseiten, insbesondere bei einer gewölbten Stirnkante STW, auf welcher der Planensaum abrollt und/oder bei überhöhtem Ladegutprofil, richtet sich bei der Verlagerung der Planenwelle der Hebel HO auf und verändert die relative Ausrichtung bezüglich der Führungsplatte LP. Die Verdrehung zwischen Hebel HO und Führungsplatte LP um den verschiebbaren Abstützpunkt APM kann durch Anschlagmittel begrenzt sein, um ein Umkippen der Hebelausrichtung zu verhindern. Derartige Anschlagmittel können auch mit Schaltmitteln verbunden sein, welche bei starker relativer Verdrehung zwischen Hebel und Führungsplatte, was insbesondere bei zu starker Ladegutüberhöhung auftreten kann, eine Abschaltung des Antriebs veranlassen. Eine Verdrehung des Hebels gegen die Führungsplatte kann auch entgegen einer Rückstellkraft erfolgen, welche die Hebelausrichtung auch nach steiler Hebelaufstellung in die eindeutige Ausrichtung, im Beispielsfall Neigung des Hebels nach links, rückstellt und ein Umkippen verhindert.

Aus Fig. 11 ist auch eine vorteilhafte Ausführung der Stirnkante STW durch Ausbildung einer die Stirnkante zur Plane hin überragenden Sicke PS (oder einer entsprechenden Erhebung), welche sich entlang des Verlaufs der Stirnkante zwischen den gegenüberliegenden Längsseiten erstreckt. Bei bis zur Endlage E1 abgewickelter und in diesem Zustand gespannter Plane liegt der Planensaum unter der Zugspannung auf der Stirnkante und mit erhöhter Spannung auf der Sicke PS auf, so daß insbesondere die Sicke PS eine gute Abdichtung des Behälterinnenraums bewirkt. Die Stirnkante ist beispielsweise als mit einer Sicke versehender Blechstreifen auf ein mit dem Behälter verbundenes Trägerprofil STT mit gewölbtem oberen Verlauf aufgesetzt und befestigt.

Aus Fig. 12 ist eine beispielhafte Aufnahme PA für die Planenwelle in der Endposition EO als Schutz und Abstützung zur Seite ersichtlich. Die feste Planen-längskante PLF kann vorteilhafterweise in einem Längsprofil des Behälteraufbaus eingehängt und zwischen Planenaufbau und einem solchen Längsprofil festgelegt sein.

Bei dem Beispiel mit schwenkbarer Rückwand des Behälters kann zur weiteren Abdeckung des Behälterraums im Bereich des Schwenklagers ein separater Streifen einer flexiblen Dichtplane DP vorgesehen sein.

Die vorstehend und in den Ansprüchen angegebenen Merkmale sind sowohl einzeln als auch in verschiedenen Kombinationen vorteilhaft realisierbar.

Die Erfindung ist nicht auf die beschriebenen Ausführungsbeispiele beschränkt, sondern im Rahmen fachmännischen Könnens in mancherlei Weise abwandelbar. Insbesondere ergeben sich große Variationsmöglichkeiten in der Ausgestaltung und Abstützung der Hebelanordnung mit einem oder mehreren Hebelelementen. Bei der Ausführung mit relativ zur Planenwelle verdrehbarer Gurtrolle kann der motorische Antrieb auch auf die Gurtrolle wirken.

## Patentansprüche

1. Vorrichtung zur Abdeckung eines Behälters, insbesondere eines Fahrzeug-Muldenbehälters, durch eine Abdeckplane, welche durch Verlagern einer Welle zwischen gegenüberliegenden Längsseiten des nach oben offenen Behälters von der Welle abrollbar bzw. auf diese aufrollbar ist, dadurch gekennzeichnet, daß die Welle an einer verlagerbaren Hebelanordnung angelenkt und mit einem Antriebsmittel gekoppelt ist, welches unter der Einwirkung eines motorischen Antriebs auf die Welle eine diese um ihre Längsachse gegen die Hebelanordnung verdrehende Kraft ausübt, wobei die Hebelanordnung von der Wellenachse beabstandet gegen die Reaktionskraft der Verdrehung abgestützt ist.

2. Vorrichtung nach Anspruch 1, dadurch gekennzeichnet, daß die Hebelanordnung an der Stirnwand des Behälters abgestützt ist.

3. Vorrichtung nach Anspruch 1 oder 2, dadurch gekennzeichnet, daß die Hebelanordnung einen in einer bezüglich des Behälters festen Kulisse geführten Abstützpunkt aufweist.

4. Vorrichtung nach Anspruch 3, dadurch gekennzeichnet, daß die Kulisse zwischen den Längsseiten an einer Stirnkante im Bereich der Behälterkante verläuft.

5. Vorrichtung nach Anspruch 3 oder 4, dadurch gekennzeichnet, daß die Kulisse einen Umkehrpunkt zum Verkippen der Ausrichtung der Hebelanordnung aufweist.

6. Vorrichtung nach Anspruch 3 oder 4, dadurch gekennzeichnet, daß die Kulisse im Bereich einer Längsseite des Behälters nach unten umgelenkt ist.

7. Vorrichtung nach einem der Ansprüche 3 bis 6, dadurch gekennzeichnet, daß eine Verschwenkung der Hebelanordnung gegen die Kulisse durch Begrenzungsmittel eingeschränkt ist.

8. Vorrichtung nach einem der Ansprüche 3 bis 7, dadurch gekennzeichnet, daß die Hebelanordnung gegen die Kulisse entgegen einer Rückstellkraft verschwenkbar ist.

9. Vorrichtung nach Anspruch 1 oder 2, dadurch gekennzeichnet, daß die Hebelanordnung an einem festen Abstützpunkt angelenkt ist.

10. Vorrichtung nach einem der Ansprüche 1 bis 9, dadurch gekennzeichnet, daß die Hebelanordnung einen starren Hebel zwischen Abstützpunkt und Wellenachse aufweist.

11. Vorrichtung nach einem der Ansprüche 1 bis 10, dadurch gekennzeichnet, daß der Abstand zwischen Abstützpunkt und Wellenachse veränderlich ist.

12. Vorrichtung nach Anspruch 11, dadurch gekennzeichnet, daß die Hebelanordnung wenigstens zwei relativ zueinander bewegbare Hebelelemente zwischen Abstützpunkt und Wellenachse aufweist.

13. Vorrichtung nach Anspruch 11 oder 12, dadurch gekennzeichnet, daß wenigstens zwei Hebelelemente teleskopartig gegeneinander verschiebbar verbunden sind.

14. Vorrichtung nach einem der Ansprüche 11 bis 13, dadurch gekennzeichnet, daß wenigstens zwei Hebelelemente gelenkig miteinander verbunden sind.

15. Vorrichtung nach einem der Ansprüche 1 bis 14, dadurch gekennzeichnet, daß der motorische Antrieb bei Erreichen der Endlagen der Verlagerung der Planenwelle automatisch abgeschaltet wird.

16. Vorrichtung nach einem der Ansprüche 1 bis 15, gekennzeichnet durch einen Elektromotor oder einen Hydraulikmotor als motorischen Antrieb.

17. Vorrichtung nach Anspruch 16, gekennzeichnet durch Überwachungseinrichtungen zur Überwachung des Motorstroms bzw. des Drucks der Hydraulikflüssigkeit.

18. Vorrichtung nach einem der Ansprüche 1 bis 17, dadurch gekennzeichnet, daß der Antriebsmotor an der Hebelanordnung in der Nähe der Wellenachse angeordnet ist.

19. Vorrichtung nach einem der Ansprüche 1 bis 18, dadurch gekennzeichnet, daß das Antriebsmittel ein Zahnrad umfaßt, welches mit dem Antriebsmotor über einen Zahn- oder Schneckentrieb in Verbindung steht.

20. Vorrichtung nach einem der Ansprüche 1 bis 19, gekennzeichnet durch eine Spannbandanordnung an einer oder vorzugsweise beiden Enden der Planenwelle.

21. Vorrichtung nach Anspruch 20, dadurch gekennzeichnet, daß eine koaxiale zur Planenwelle angeordnete Spannbandrolle entgegen einer Rückstellkraft um ein begrenztes Maß gegen die Welle verdrehbar ist.

22. Vorrichtung nach Anspruch 21, dadurch gekennzeichnet, daß das Spannband in jeder Position der Wellenverlagerung unter Einwirkung einer Federspannung gespannt ist.

23. Vorrichtung nach einem der Ansprüche 1 bis 22, dadurch gekennzeichnet, daß an beiden Enden der Welle gleichartige Hebelanordnung vorgesehen ist.

24. Vorrichtung nach Anspruch 23, dadurch gekennzeichnet, daß nur an einem Wellenende ein motorischer Antrieb vorgesehen ist.

25. Vorrichtung nach Anspruch 23, dadurch gekennzeichnet, daß an beiden Wellenenden je ein Antriebsmotor vorgesehen ist.

26. Vorrichtung nach einem der Ansprüche 1 bis 25, gekennzeichnet durch eine Niederhalteeinrichtung für die abgerollte Abdeckplane an wenigstens einer Stirnseite.

27. Vorrichtung nach Anspruch 26, gekennzeichnet durch eine Klettverschlußeinrichtung als Niederhalteeinrichtung.
